# EUROPEAN PATENT APPLICATION

(11) **EP 1 726 767 A1**
(43) Date of publication of application: **29.11.2006**
(21) Application number: 05425368.7
(22) Date of filing: 25.05.2005
(51) Int. Cl.: E06B 3/96, B27M 3/00

(54) **Machine to insert and tighten fixings in predrilled holes to couple mitre cut joining heads of wood or wood-metal profiles in the manufacturing of frames and door/window frames**

(71) Applicant: Scagis s.r.l., 53048 Scrofiano di Sinalunga (Siena) (IT)
(72) Inventor: Scaramuzzino, Francesco Luigi, 88064 Chiaravalle Centrale (Catanzaro) (IT)

(57) **Abstract**

The invention consists in an inserting-tightening machine which allows the simultaneous insertion of fixings (bush, bolt and nut) in two two diameters holes predrilled perpendicularly to the joining heads of two miter cut wood and wood-metal profiles sections and their tightening in manufacturing door/ window frames. The machine makes possible the perfect match of the millings and holes of the two joining heads coupled by means of positioning dowels and fixings. The bolt, once tightened, applies a force, perpendicular to the coupling surfaces, sufficient to assure a firm mitre joint. The machine consists of a structure bearing the positioning assembly to position the two profile joining heads to be assembled (VI), a devise which has a nut inserter-pusher assembly (I) and a bush and bolt inserter-advancing screwdriver assembly (II) which moving one toward the other on roll-off horizontal slide guides allow the insertion of fixings in the perfectly coaxial pre drilled holes perpendicular to the mitre junction and their tightening, a vertical feeder with a double magazine one containing bushes and bolts (VII) and bolts (III), the other containing nuts (IV), and a clamping unit fitted with pneumatic vices.

## Description

The invention concerns a machine that make possible the firm coupling by means of fixings (junction bolts, nuts and bushes) of wood and wood-metal profiles with head mitre cuts , in order to obtain rectangular frames, sashes or fixed frames to delimit the openings of windows or doors.

Doors and windows frames obtained by coupling profiles whose extremities are cut at 45° are known. In these, the profiles, previously drilled and milled, are joined one to the other along the 45° mitre cuts using dowelled joints, thin wood plates and glue in order to obtain the rectangular frames. The glue, once dried, firmly binds the profiles and they can be separated only breaking the parts glued together. The high cost of doors and windows produced this way is justified by the complexity and length of the various operational phases, which include drilling, milling of the joining heads and the clamping the profiles in the correct position during the drying of the glue, that require the work of skilled artisans. Furthermore, windows and doors produced with this system have a relatively low mechanical strength of the joints and, as consequence, a low reliability if they are used for large surfaces, particularly if thick glass panes are installed as mechanical stress caused by the weight is considerable. To obviate to this structural drawback metal " L" shaped metal reinforcements are fixed with screws to the external edges of the sash or door frame. In other solutions metal squares are embedded in blind grooves milled across the 45° cuts and screwed to the profiles.

The wood or wood-metal profiles on which this machine has to operate on to form corners has longitudinal grooves that on one side are for the housing of gaskets, panes and panels while on the opposite side they generate a rebate. To prepare the parts that have to be assembled, two diameters holes are drilled perpendicularly to the 45° mitre cut joining heads which are to be coupled to form the corner of the frame. The coupling surfaces are also milled to form grooves in which thin wood plates are to be housed and glued. Using these profiles the joints are completed with bolts, nuts and bushes whose tightening allows the formation of the corners of the frame.

The frame obtained this way is very strong since the mechanical stress transmitted to the corners is supported by the bolts which at the same time make possible the firm coupling of the profiles at the joining hads.

The invention consists in a machine that automatically positions fixings in holes previously drilled in the joining heads of the profiles and then tightens them in order to obtain the corners of the frame. The machine inserts a bush and a bolt in the two coaxial two diameter holes previously drilled perpendicularly to the joining mitre cut heads of the two profiles that have to be coupled by pushing them through one of the two profiles and, at the same time, it places the nut at the end of the bush opposite to the one where the bolt is inserted by pushing it through the other profile. Afterwards the machine screws and tightens the bolt to the nut.

To better understand the work done by the machine it is necessary to refer to the following drawings that illustrate one kind of profile and fixings that can be used in the making of a sash.

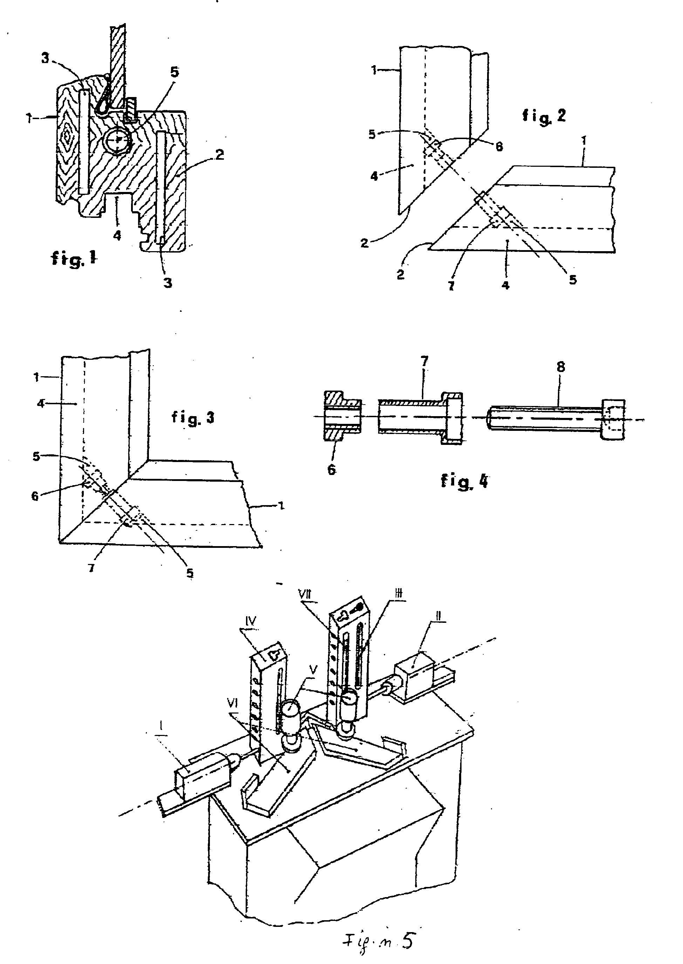

- Fig. 1 - cross section of the profile used in a sash including the window pane and the glazing bead.
- Fig. 2 - frontal view of the profiles before the coupling
- Fig. 3 - frontal view of the profile after the coupling
- Fig. 4 - fixings

In the drawing are shown: wood profile marked by (1); surfaces to be coupled marked by (2); grooves housing the thin wood plates marked by (3); groove to drill two holes and to insert/position the fixings marked by (4); two diameter holes to house the bush or the nut marked by (5); nut marked by (6); shaped bush to lodge at one end the head of the bolt marked by (7); bolt marked by (8).

The machine, hereafter described with the help of fig. 5 represents the solution adopted for the coupling of the 45° mitre joining heads. Obviously in building the machine it is possible to bring changes held advantageous without changing the concept of the invention. However, the assembly scheme and the described parts are provided only to illustrate the invention in no way set a limitation to its concept.

The machine consists in a load bearing structure that acts as a bed plate on which are positioned, according to the operational sequence, utensils, mechanisms and protection systems.

On the machine bed are fixed (see fig . 5): a vertical feeder with a double magazine, one for the nuts marked by (IV) and the other for bushes marked by (VII) and bolts marked by (III); a bolt inserter-advancing screwer assembly marked by (II) and a nut inserter-pusher assembly marked by (I) lined up with the vertical feeder; a positioning assembly formed by two bars at a 90° angle marked by (VI); clamping unit fitted with two pneumatic vices marked by (V).

Once profiles are pushed against the two bars of the positioning assembly (VI) to form the 90° corner coupling the 45° mitre cuts, the two pneumatic vices (V) lock the profiles in position. At this point the machine is started simply by pushing a button. The bolt inserter-advancing screwer assembly (II) and the nut inserter-pusher assembly marked (I), moving one toward the other on roll-off horizontal slide guides, provide to insert in the pre drilled two diameters holes, to position and to tighten the fixings which are supplied by the vertical feeder. When the tension on the bolt has reached a set value the screwer stops automatically and the corner formed by the coupled profiles can be extracted by releasing the pneumatic vices.

## Claims

1. Automatic inserting-tightening machine which allows the simultaneous insertion of fixings (bush, bolt an nut) in two two diameters holes predrilled perpendicularly to the joining heads of two meter cut wood or wood-metal profiles sections and their tightening in manufacturing door/window frames. The machine is **characterized by**: a positioning assembly (V) and (VI); an inserting-tightening assembly (II) and (I); a fixings vertical feeder with a double magazine (III), (IV) and (VI).

2. Automatic inserting-tightening machine as claimed in claim 1) **characterized by** a positioning assembly formed by two bars at a 90° angle (VI) and by two pneumatic vices (V).

3. Automatic inserting-tightening machine as claimed in claim 1) and 2), **characterized by** a vertical charger with two magazines, one containing bushes (VII) and bolts (III), the other containing nuts (IV).

4. Automatic inserting-tightening machine as claimed in claim 1), 2), and 3) **characterized by** a bolt inserter-advancing screwer assembly (II) and a nut inserter-pusher assembly (I) lined up with the vertical feeder and the two diameter holes bored in the profiles to be coupled.

5. Automatic inserting-tightening machine as claimed in claim 1), 2), 3) and 4), **characterized by** a system of pneumatic valves to control and operate utensils, mechanism and safety devices.

## Amended claims

### Amended claims in accordance with Rule 86(2) EPC.

**1.** Automatic inserting-tightening machine to insert simultaneously fixings ( bush, bolt and nut ) in holes predrilled perpendicularly to the joining heads of two meter cut wood or wood-metal profile sections and to tighten them. The machine is **characterized by**: a positioning assembly to hold in a predefined position the profile sections to be assembled by means of two positioning bars ( VI ) forming a preset angle and two electric, mechanical, or pneumatic vices ( V ); an inserting-tightening assembly constituted by two synchronized electric or pneumatic devices, the first ( I ) to insert in one of the profile section and hold in place the nut (IV ) while the second (II) inserts the bush ( VI ) and the bolt ( III ) in the other profile section and then screws and tightens the bolt to the nut; a fixings vertical feeder with two magazines, one to contain and to feed bushes ( VII ) and bolts (III ), the other to contain and to feed nuts (IV ).

**2.** Automatic inserting-tightening machine as claimed in claim 1) **characterized by** a positioning assembly formed by two positioning bars ( VI ) forming a preset angle and by two electric, manual, or pneumatic vices ( V ).

**3.** Automatic inserting-tightening machine as claimed in claim 1) and 2) **characterized by** a vertical feeder with two magazines one to contain and to feed bushes ( VII ) and bolts (III ), the other to contain and to feed nuts (IV ).

**4.** Automatic inserting-tightening machine as claimed in claim 1), 2) and 3) **characterized by** a bolt inserter- advancing screwer electric or pneumatic device (II ) and a nut inserter-pusher electric or pneumatic device both lined up with the vertical feeder and the two diameter holes bored in the profile sections to be coupled.

**5.** Automatic inserting-tightening machine as claimed in claim 1), 2), 3) and 4) **characterized by** a system of pneumatic valves or electric switches to control and operate utensils, mechanisms and safety devices.
